# EUROPÄISCHE PATENTSCHRIFT

(11) **EP 1 614 606 B1**
(45) Veröffentlichungstag und Bekanntmachung des Hinweises auf die Patenterteilung: **05.12.2007**
(21) Anmeldenummer: 05013786.8
(22) Anmeldetag: 27.06.2005
(51) Int. Cl.: B62D 1/16, F16F 15/00

(54) **Lenksäule**
Steering column
Colonne de direction

(30) Priorität: 08.07.2004 DE 102004033230
(43) Veröffentlichungstag der Anmeldung: 11.01.2006
(73) Patentinhaber: Benteler Automobiltechnik GmbH, 33104 Paderborn (DE)
(72) Erfinder: Fischer, Jochem, 73760 Ostfildern (DE); Druhmann, Sven, 33649 Bielefeld (DE)
(74) Vertreter: Ksoll, Peter

(56) Entgegenhaltungen:
- WO-A-02/08045
- DE-A1- 3 939 822
- DE-A1- 10 055 114
- DE-A1- 10 226 477
- US-A- 5 687 462
- PATENT ABSTRACTS OF JAPAN Bd. 2000, Nr. 16, 8. Mai 2001 (2001-05-08) -& JP 2001 001911 A (ISEKI & CO LTD), 9. Januar 2001 (2001-01-09)

## Beschreibung

Die Erfindung betrifft eine Lenksäule für ein Kraftfahrzeug, die ein aktives System zur Schwingungsdämpfung aufweist mit zumindest einem Piezoelement, welches an einem Lenksäulenabschnitt angeordnet ist.

Eine solche Lenksäule zählt durch die DE 102 26 477 A1 zum Stand der Technik. Dort sind piezoelektrische Aktuatoren außen auf der Lenksäule angeordnet. Ferner ist zumindest ein separater Sensor zur Erfassung von Vibrationen vorgesehen. Der Aktuator und der Sensor stehen mit einer Regeleinrichtung in Verbindung. Der Sensor liefert Signale, die ein Maß für vorhandene Störschwingungen sind, worauf die Regeleinrichtung Stellsignale für die Aktuatoren erzeugt, über die dann eine Gegenschwingung zu den störenden Vibrationen in das System eingeleitet wird.

In der DE 196 42 827 A1 wird ein aktives System zur Schwingungsdämpfung beschrieben, das zumindest ein Piezoelement aufweist. Das Piezoelement arbeitet sowohl aktorisch als auch sensorisch.

In der WO 02/08045 wird ebenfalls ein ähnliches System gezeigt.

Der Erfindung liegt ausgehend vom Stand der Technik die Aufgabe zugrunde, das System zur Schwingungsdämpfung an einer Lenksäule zu verbessern.

Die Lösung dieser Aufgabe besteht nach der Erfindung in einer Lenksäule gemäß den Merkmalen von Patentanspruch 1.

Vorteilhafte Ausgestaltungen der erfindungsgemäßen Lenksäule sind Gegenstand der abhängigen Ansprüche 2, 3 und 4.

Kernpunkt der Erfindung bildet die Maßnahme, dass Piezoelemente eingesetzt werden, die sowohl als Sensor als auch Aktuator fungieren. Hierbei kommen insbesondere Sensor-/Aktuator-Elemente auf Basis von piezokeramischen Faserverbundwerkstoffen zum Einsatz. Die eingesetzten Piezoelemente haben eine multifunktionale Faserverbundstruktur und können eine physikalische Größe in eine andere wandeln und umgekehrt.

Zumindest ein Lenksäulenabschnitt als Hohlprofil ausgeführt, wobei ein oder mehrere Piezoelemente im Inneren des Lenksäulenabschnitts angeordnet sind. Hierdurch sind die Piezoelemente äußeren Einflüssen entzogen. Zudem ist ihre Lage im Inneren des Lenksäulenabschnitts nahe an der neutralen Faser der Lenksäule, so dass sie besonders effektiv arbeiten können.

Mehrere Piezoelemente sind am Lenksäulenabschnitt auf einem Teilkreis versetzt angeordnet. Hierdurch kann die Effektivität der Schwingungsdämpfung weiter gesteigert werden.

Die Piezoelemente werden als Sensor zur Erfassung von im Betrieb des Kraftfahrzeugs an der Lenksäule auftretenden Schwingungen bzw. Vibrationen und als Aktuator zur Schwingungsregelung benutzt. Hierbei wird das Piezoelement sequentiell getaktet einmal als Sensor verwendet, indem eine auftretende Längenänderung gemessen wird, und beim nächsten Takt als Aktuator zur Dämpfung von Schwingungen eingesetzt. Zur Schwingungsdämpfung wird das Piezoelement verformt, insbesondere in der Länge verändert. Hierdurch werden mechanische Kräfte in das System eingeleitet, um so eine Gegen- bzw. Kompensationsschrumpfung für eine auftretende Störschwingung zu erzeugen. Die Taktfrequenz wird über eine zum System gehörende Steuer- und Regeleinrichtung vorgegeben. Vorteilhafterweise werden Piezoelemente verwendet, die zum einen über eine angelegte Spannung zu einer Längenänderung gezwungen werden können und im umgekehrten Fall über die Längenänderung eine Spannung am Piezoelement detektiert wird, die Auskunft über die Längenänderung und damit die Störschwingung gibt.

Auf diese Weise kann ein aktives System zur Schwingungsdämpfung an einer Lenksäule geschaffen werden, welches ohne separaten Sensor auskommt und störunanfällig sowie sehr feinfühlig arbeitet. Insbesondere die Ersparnis eines separaten Sensors führt zu einer deutlichen Verbesserung des Systems. Da Sensor und Aktuator am gleichen Ort liegen, können Störeinflüsse und Messungenauigkeiten, die sich bei bekannten Vorschlägen aus dem geometrischen Abstand der Bauteile ergeben, vermieden werden.

Insbesondere im Bereich der Anbindung der Lenksäule an den Instrumententräger des Kraftfahrzeugs an der Lenksäulenhalterung wirken applizierte Piezoelemente besonders effektiv.

Die Erfindung ist nachfolgend anhand eines Ausführungsbeispiels näher beschrieben. Es zeigen:
- Figur 1: technisch vereinfacht eine Lenksäule in einer Schnittdarstellung;
- Figur 2: einen Ausschnitt aus der Lenksäule im Längsschnitt;
- Figur 3: einen Schnitt durch die Darstellung der Figur 1 entlang der Linie A-A und
- Figur 4: ein Diagramm mit der Darstellung der Betriebsweise eines erfindungsgemäß eingesetzten Piezoelements.

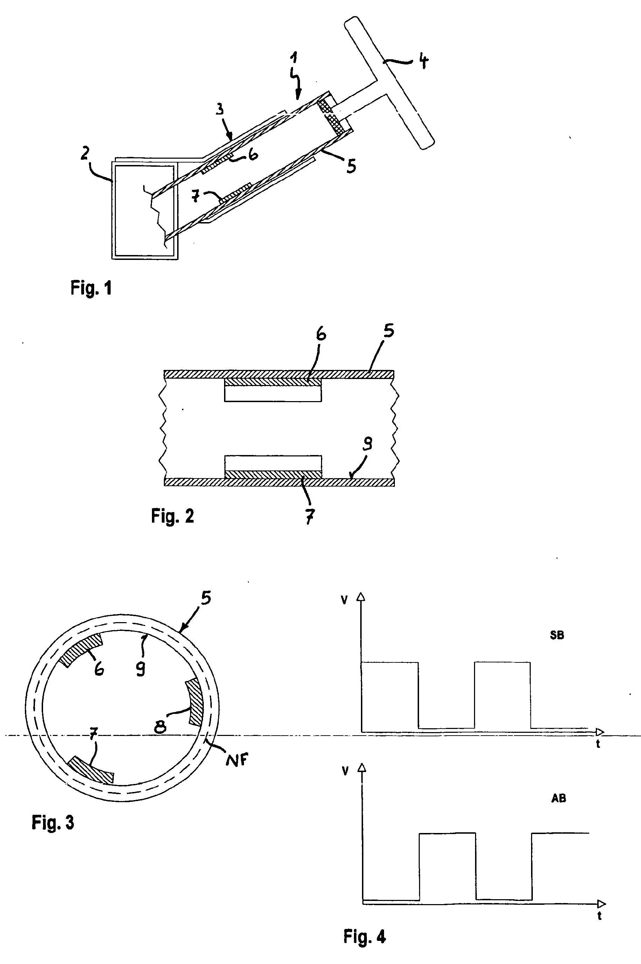

In der Figur 1 ist eine Lenksäule 1 für ein Kraftfahrzeug dargestellt. Die Lenksäule 1 ist mit einem Instrumententräger 2 über eine Lenksäulenhalterung 3 verbunden. Die Lenksäule 1 ist als Hohlprofil ausgeführt und kann ein- oder mehrteilig sein. Das Lenkrad ist in der Figur 1 mit 4 bezeichnet.

Im Bereich der Lenksäulenhalterung 3 sind an einem Lenksäulenabschnitt 5 im Inneren der Lenksäule 1 Piezoelemente 6, 7, 8 appliziert. Wie insbesondere aus den Figuren 2 und 3 ersichtlich, sind die Piezoelemente 6, 7, 8 auf einem Teilkreis versetzt an der Innenseite 9 des Lenksäulenabschnitts angebracht. Hier liegen die Piezoelemente 6, 7, 8 sehr nahe an der neutralen Faser NF des Lenksäulenabschnitts 5 und können ihre maximale Effektivität erreichen. Die Piezoelemente 6, 7, 8 werden von einer hier nicht dargestellten Steuer- und Regeleinrichtung getaktet angesteuert und fungieren in Abhängigkeit von ihrer Taktung einmal als Sensor und sodann als Aktuator.

Die Taktung im Sensorbetrieb SB und im Aktuatorbetrieb AB der Piezoelemente 6-8 ist in dem Diagramm gemäß Figur 4 zu erkennen. Hier ist jeweils die Spannung über die Zeit im Sensorbetrieb SB (Figur 4 oben) und im Aktuatorbetrieb AB (Figur 4 unten) dargestellt. Man erkennt, dass die Piezoelemente 6-8 jeweils abwechselnd im Sensorbetrieb SB und im Aktuatorbetrieb AB arbeiten. Im Falle von eingeleiteten Schwingungen bzw. Vibrationen erfahren die Piezoelemente 6-8 Verformungen, insbesondere eine Längenänderung, die zu einer messbaren Spannung bzw. Spannungsänderung führt. Diese wird erfasst und von der Steuer- und Regeleinheit ausgewertet. In Abhängigkeit hiervon werden dann die Piezoelemente 6-8 als Aktuatoren angesteuert und zu einer richtungsgesteuerten Längenänderung gezwungen. Durch diese mechanische Krafteinleitung wird eine Gegen- bzw. Kompensationsschwingung in das System eingeleitet, so dass eine Störschwingung unterdrückt bzw. gedämpft werden kann.

### Bezugszeichen:

- 1 -: Lenksäule
- 2 -: Instrumententräger
- 3 -: Lenksäulenhalterung
- 4 -: Lenkrad
- 5 -: Lenksäulenabschnitt
- 6 -: Piezoelement
- 7 -: Piezoelement
- 8 -: Piezoelement
- 9 -: Innenseite v. 5

- AB -: Aktuatorbetrieb
- NF -: neutrale Faser v. 5
- SB -: Sensorbetrieb

## Patentansprüche

1. Lenksäule für ein Kraftfahrzeug, die ein aktives System zur Schwingungsdämpfung aufweist mit zumindest einem Piezoelement, welches an einem Lenksäulenabschnitt angeordnet ist, **dadurch gekennzeichnet, dass** mit dem Piezoelement (6-8) Vibrationen des Lenksäulenabschnitts (5) sensorisch erfassbar und aktuatorisch Gegenschwingungen in den Lenksäulenabschnitt (5) einleitbar sind.

2. Lenksäule nach Anspruch 1, **dadurch gekennzeichnet, dass** der Lenksäulenabschnitt (5) als Hohlprofil ausgeführt und das Piezoelement (6-8) im Inneren des Lenksäulenabschnitts (5) angeordnet ist.

3. Lenksäule nach Anspruch 1 oder 2, **dadurch gekennzeichnet, dass** mehrere Piezoelemente (6-8) am Lenksäulenabschnitt (5) auf einem Teilkreis versetzt angeordnet sind.

4. Lenksäule nach einem der Ansprüche 1 bis 3, **dadurch gekennzeichnet, dass** das Piezoelement (6-8) im Bereich der Lenksäulenhalterung (3) angeordnet ist.

## Claims

1. Steering column for a motor vehicle, which has an active system for damping vibrations, comprising at least one piezo element which is arranged on a steering column section, **characterized in that** the piezo element (6-8) can detect vibrations of the steering column section (5) in the manner of a sensor and can initiate counter-vibrations in the steering column section (5) in the manner of an actuator.

2. Steering column according to Claim 1, **characterized in that** the steering column section (5) is designed as a hollow profile and the piezo element (6-8) is arranged in the interior of the steering column section (5).

3. Steering column according to Claim 1 or 2, **characterized in that** a plurality of piezo elements (6-8) are arranged in an offset manner on a pitch circle on the steering column section (5).

4. Steering column according to one of Claims 1 to 3, **characterized in that** the piezo element (6-8) is arranged in the region of the steering column mount (3).

## Revendications

1. Colonne de direction pour un véhicule automobile, qui présente un système actif pour l'amortissement des vibrations avec au moins un élément piézoélectrique, qui est disposé sur un tronçon de colonne de direction,
**caractérisée en ce qu'**avec l'élément piézoélectrique (6-8) les vibrations du tronçon de la colonne de direction (5) peuvent être saisies par capteur et des contre-vibrations peuvent être introduites par un dispositif d'actionnement dans le tronçon de la colonne de direction.

2. Colonne de direction selon la revendication 1,
**caractérisée en ce que** le tronçon de la colonne de direction (5) est exécuté en profilé creux et l'élément piézoélectrique (6-8) est disposé à l'intérieur du tronçon de la colonne de direction (5).

3. Colonne de direction selon la revendication 1 ou 2,
**caractérisée en ce que** plusieurs éléments piézoélectriques (6-8) sont disposés de façon décalée sur un cadran divisé du tronçon de la colonne de direction (5).

4. Colonne de direction selon l'une des revendications 1 à 3,
**caractérisée en ce que** l'élément piézoélectrique (6-8) est disposé au niveau de la fixation de la colonne de direction (3)
